# EUROPEAN PATENT APPLICATION

(11) **EP 4 674 277 A1**
(43) Date of publication of application: **07.01.2026**
(21) Application number: 24926261.9
(22) Date of filing: 11.12.2024
(51) Int. Cl.: A23G 9/04, A23G 9/22, F25C 1/00

(54) **MACHINE BODY FOR SLUSH MACHINE, AND SLUSH MACHINE**

(30) Priority: 06.09.2024 CN 202422198860 U; 07.05.2024 CN 202420973585 U
(71) Applicant: Guangzhou Xin'an Trading Co., Ltd., Guangzhou Guangdong 510000 (CN)
(72) Inventor: CHEN, Kui, Guangzhou, Guangdong 510000 (CN)
(74) Representative: Chung, Hoi Kan
(86) International application number: PCT/CN2024/138309
(87) International publication number: WO 2025/232187

(57) **Abstract**

This application discloses a reinforced housing for a slush machine and the machine incorporating it. The housing's key innovation is a supporting frame consisting of a first and second bracket mounted on the machine's base. The first bracket connects the front of the base to the main support frame, while the second bracket connects the rear of the base to the frame. Critically, the second bracket is also designed to house the condenser for the refrigeration system. This integrated design, where a core component is nested within a structural support, significantly enhances overall strength, improves the stability of connections, and extends the machine's service life.

## Description

### TECHNICAL FIELD

The present application relates to the technical field of slush machines, particularly to a housing for a slush machine and a slush machine.

### BACKGROUND

With the growing slush beverage market, commercial slush machines (also known as slush machines) have become essential equipment for beverage shops, restaurants, and other venues. The performance and structural design of these machines directly impact the user experience. Currently, commercial slush machines on the market typically comprise a housing, a refrigeration system, and a stirring system.

Most housings adopt an integrated frame design, where the side panels and base plate are formed as a single structure. The refrigeration system is fixed within this integrated structure, and the support plate for the stirring system is attached to it. Although this design reduces the number of installation steps to some extent, the large spans between different parts of the integrated housing can result in low structural strength. Prolonged use or transportation may lead to deformation, cracking, and other issues in the housing, severely affecting the stability and service life of the equipment. Moreover, the integrated structure poses significant challenges in installation and disassembly, making the process complex and time-consuming.

### SUMMARY

The technical problem to be solved by the present application is to provide a housing for a slush machine that enhances overall structural strength and extends service life.

To solve the above technical problem, the present application provides a housing for a slush machine, comprising a base, a front panel, side panels, a rear panel, a support frame, a motor frame, and a cover. The front panel and the rear panel are detachably fixed to the front and rear sides of the base, respectively. The side panels are detachably fixed to the left and right sides of the base. The support frame is positioned above the base, and the motor frame is mounted on the support frame. The cover is connected to the motor frame.

The housing further includes a support frame, which comprises a first bracket and a second bracket. The first bracket is positioned at one end of the base near the front panel, with its bottom connected to the base and its top connected to the end of the support frame near the front panel. The second bracket is positioned at the other end of the base near the rear panel, with its bottom connected to the base and its top abutting the bottom of the support frame. The condenser of the refrigeration system is arranged within the second bracket.

As an improvement to the above solution, the front and rear ends of the base are provided with a front mounting section and a rear mounting section, respectively. The front mounting section is equipped with a first upright positioning groove, and the bottom of the first bracket is provided with an "L"-shaped front mounting angle iron. The bottom of the front mounting angle iron is arranged to be inserted into the first upright positioning groove, and the first upright positioning groove is provided with a first upright fixing hole. The front mounting angle iron is fixed within the first upright fixing hole.

As an improvement to the above solution, the rear mounting section is provided with a second upright positioning groove. The outer side of the second upright positioning groove is equipped with a second upright fixing hole. The bottom of the second bracket is provided with a vertically arranged rear insert plate, and the side of the rear insert plate is equipped with a rear mounting fixing plate. The rear mounting fixing plate protrudes outward from the surface of the rear insert plate toward the outer side of the second bracket. The rear insert plate is arranged to be inserted into the second upright positioning groove, and the rear mounting fixing plate is fixed within the second upright fixing hole.

As an improvement to the above solution, the front and rear sides of the support frame are respectively provided with a front support mounting section and a rear support mounting section. The front support mounting section is equipped with a vertically arranged front limiting post. The top of the first bracket is provided with a crossbar, and the crossbar is provided with an upright positioning hole and a third upright fixing hole. The front limiting post is arranged to be inserted into the upright positioning hole, and the front support mounting section is fixed to the third upright fixing hole.

The top of the second bracket is provided with a second upper protrusion. The side of the rear support mounting section is equipped with a vertically arranged second rear limiting post. A second limiting groove is formed between the second rear limiting post and the rear support mounting section. The second upper protrusion is arranged to be inserted into the second limiting groove. The second upper protrusion is provided with a horizontally arranged second upper fixing hole, and the rear support mounting section is fixed to the second upper fixing hole.

As an improvement to the above solution, one side of the second upper protrusion, which is away from the second rear limiting post, is further provided with a vertically arranged rear limiting plate. The bottom of the rear support mounting section is also provided with a vertically arranged second rear limiting post. The side of the second rear limiting post is arranged to abut the side surface of the rear limiting plate, and the bottom of the rear support mounting section abuts the upper edge of the rear limiting plate.

As an improvement to the above solution, the left and right sides of the base are respectively provided with bottom limiting grooves. The openings of the bottom limiting grooves face downward. The bottom of the side panels is provided with bottom limiting cylinders, which is arranged to be inserted into the bottom limiting grooves. The bottom limiting grooves are provided with bottom fixing holes, and the bottom limiting cylinders are arranged to be fixed into the bottom fixing holes.

Multiple bottom limiting cylinders are connected by bottom limiting ribs arranged in the front-rear direction. Multiple bottom limiting grooves are connected by bottom limiting long slots arranged in the front-rear direction. The bottom limiting ribs are arranged to be inserted into the bottom limiting long slots.

As an improvement to the above solution, the top of the side panels is provided with upper limiting long slots arranged in the front-rear direction. The openings of the upper limiting long slots face upward. The edge of the top of the support frame is provided with upper limiting ribs arranged in the front-rear direction and extending downward. The upper limiting ribs are arranged to be inserted into the upper limiting long slots.

The bottom of the motor frame is provided with a vertically arranged frame limiting post. The support frame is provided with a frame fixing section, which is equipped with a frame limiting hole. The frame limiting post is arranged to be inserted into the frame limiting hole. The frame fixing section is further provided with heat dissipation holes.

As an improvement to the above solution, the front side of the side panels is provided with multiple front fixing hooks. The front fixing hooks are hook-shaped with ends extending upward. Both the left and right sides of the front panel are equipped with front upright plates, and the front upright plates are provided with multiple side fixing holes. The horizontal span of the side fixing holes decreases progressively from bottom to top, and the front fixing hooks are arranged to be inserted into the side fixing holes.

As an improvement to the above solution, the rear edge of the side panels is provided with multiple rear fixing hooks. The ends of the rear fixing hooks extend toward the rear. The left and right edges of the rear panel are equipped with vertically arranged rear limiting grooves, and the ends of the rear fixing hooks are arranged to be inserted into the rear limiting grooves.

As an improvement to the above solution, both the left and right sides of the cover are provided with sliding plates arranged in the front-rear direction. The sliding plates protrude from the side surface of the cover. The inner sidewalls of the support frame are equipped with sliding slots, and the positions of the sliding slots correspond to those of the sliding plates. The sliding plates are arranged to be inserted into the sliding slots. The ends of the sliding slots are provided with stop plates, and the sliding plates are arranged to abut against the stop plates.

The present application also provides a slush machine that includes the housing described above.

### Beneficial Effects

The housing for the slush machine provided by the present application comprises a base, a front panel, side panels, a rear panel, a support frame, a motor frame, a cover, and a supporting frame. The front panel and the rear panel are detachably fixed to the front and rear sides of the base, while the side panels are detachably fixed to the left and right sides of the base. The base, front panel, side panels, and rear panel are designed as separate components. This split structure reduces the overall span of each part, which not only improves connection strength but also enhances overall structural strength.

The supporting frame includes a first bracket and a second bracket. The top of the first bracket is connected to the end of the support frame near the front panel, and the top of the second bracket abuts the bottom of the support frame. The condenser of the refrigeration system is positioned within the second bracket. By dividing the components supporting the support frame into the first and second brackets, the two ends of the support frame are fixed separately, achieving better fixation and further improving connection strength.

### BRIEF DESCRIPTION OF THE DRAWINGS

FIG. 1 is a schematic diagram of the disassembled structure of the housing for a slush machine according to the present application.
FIG. 2 is a schematic diagram of the first partial disassembled structure of the housing for a slush machine according to the present application.
FIG. 3 is an enlarged view of area A in FIG. 2.
FIG. 4 is an enlarged view of area B in FIG. 2.
FIG. 5 is a schematic diagram of the partial disassembled structure of the base, side panels, and front panel of the present application.
FIG. 6 is a schematic diagram of the second partial disassembled structure of the housing for a slush machine according to the present application.

### DETAILED DESCRIPTION

To clarify the objectives, technical solutions, and advantages of the present application, a detailed description is provided below in conjunction with the accompanying drawings. In the text, directional terms such as top, bottom, left, right, front, back, inner, and outer are based on the accompanying drawings and are not intended to limit the scope of the application.

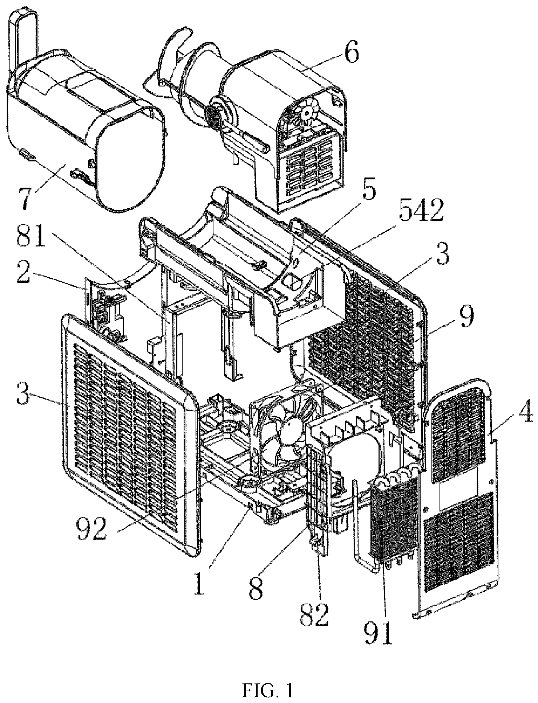

Referring to FIG. 1, the embodiment of the present application discloses a housing for a slush machine, comprising a base (1), a front panel (2), side panels (3), a rear panel (4), a support frame (5), a motor frame (6), and a cover (7). The front panel (2) and the rear panel (4) are detachably fixed to the front and rear sides of the base (1), respectively. The side panels (3) are detachably fixed to the left and right sides of the base (1). The front panel (2), rear panel (4), and side panels (3) enclose the four sides of the base (1), forming a modular structure. Compared to the traditional integrated structure, this modular structure has the advantages of dispersed connection points, smaller spans for individual components, and higher overall strength. The support frame (5) is positioned above the base (1). The motor frame (6) is mounted on the support frame (5), and the cover (7) is connected to the motor frame (6). The motor frame (6) is used to secure the motor, while the support frame (5) supports the scraper and accommodates the liquid-containing chamber. The cover (7) encloses the outer part of the chamber.

To improve connection strength, the housing for the slush machine further includes a supporting frame (8), which comprises a first bracket (81) and a second bracket (82). The first bracket (81) is positioned at one end of the base (1) near the front panel (2), with its bottom connected to the base (1) and its top connected to the end of the support frame (5) near the front panel (2). The second bracket (82) is positioned at the other end of the base (1) near the rear panel (4). The first bracket (81) and the second bracket (82) are located at the front and rear ends of the supporting frame (8), respectively. The bottom of the second bracket (82) is connected to the base (1), and its top abuts the bottom of the support frame (5). The condenser (91) of the refrigeration system (9) is positioned within the second bracket (82). The second bracket (82) not only supports and fixes the supporting frame (8) but also secures the condenser (91). In traditional slush machines, the component supporting the support frame (5) is integrated. Compared to this traditional integrated structure, splitting the supporting frame (8) into two parts allows the front and rear ends of the support frame (5) to be independently supported. This design reduces the material required for an integrated structure, minimizes the span of individual components, and ensures the same support functionality. Moreover, fixing the front and rear ends separately enhances connection strength and stability.

Beneficial effects of the embodiment of the present application are as follows:
The embodiment of the present application provides a housing for a slush machine, which includes a base (1), a front panel (2), side panels (3), a rear panel (4), a support frame (5), a motor frame (6), a cover (7), and a supporting frame (8). The front panel (2) and the rear panel (4) are detachably fixed to the front and rear sides of the base (1), respectively. The side panels (3) are detachably fixed to the left and right sides of the base (1). The base (1), front panel (2), side panels (3), and rear panel (4) are modularly designed. This modular structure reduces the overall span of each component, enhancing the overall structural strength while improving connection strength. The supporting frame (8) includes a first bracket (81) and a second bracket (82). The top of the first bracket (81) is connected to the end of the support frame (5) near the front panel (2). The top of the second bracket (82) abuts the bottom of the support frame (5). The condenser (91) of the refrigeration system is positioned within the second bracket (82). By dividing the components supporting the support frame (5) into the first bracket (81) and the second bracket (82), the two ends of the support frame (5) are fixed separately. This design achieves better fixation, enhances connection strength, and provides more reliable support.

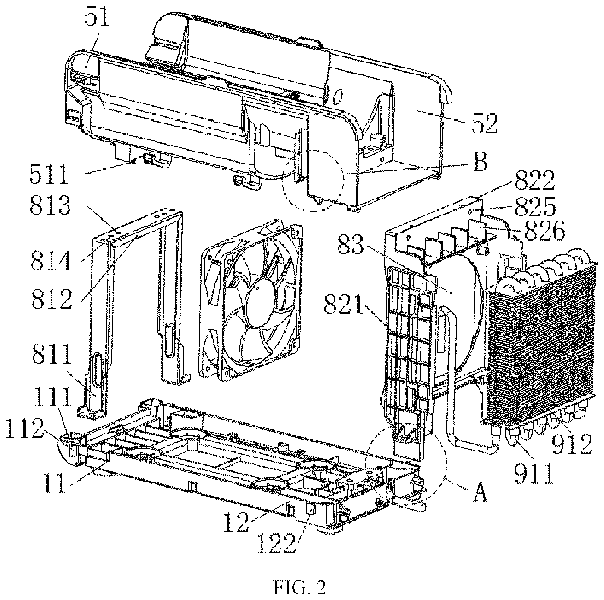

Specifically, referring specifically to FIG. 2, the front and rear ends of the base (1) are provided with a front mounting section (11) and a rear mounting section (12), respectively. The front mounting section (11) includes a first upright positioning groove (111) with an upward-facing opening. The bottom of the first bracket (81) is equipped with an "L"-shaped front mounting angle iron (811). The shape of the opening of the first upright positioning groove (111) corresponds to the bottom of the front mounting angle iron (811). During installation, the bottom of the front mounting angle iron (811) is arranged to be inserted into the first upright positioning groove (111), achieving a limiting effect. The first upright positioning groove (111) is also provided with a first upright fixing hole (112). After achieving the limiting effect, the front mounting angle iron (811) is arranged to be secured within the first upright fixing hole (112) using screws or other fastening components. This limiting effect facilitates the installation and fixation of the first bracket (81), ensuring both stability and ease of assembly._{∘}

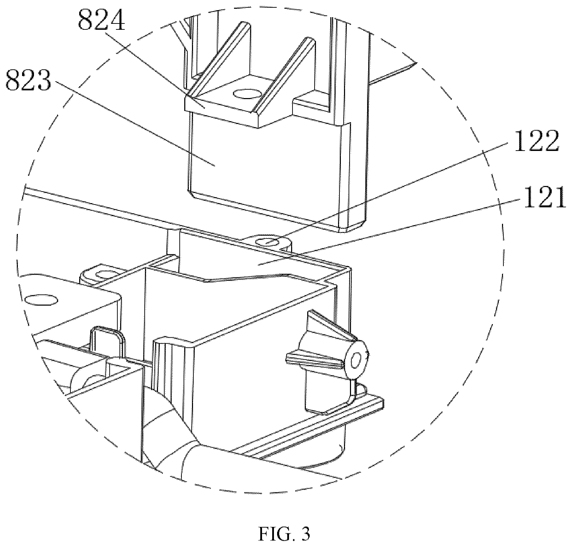

Additionally, referring to FIG. 3, the rear mounting section (12) is provided with a second upright positioning groove (121), with its opening facing upward. The outer side of the second upright positioning groove (121) is equipped with a second upright fixing hole (122). The bottom of the second bracket (82) is provided with a vertically arranged rear insert plate (823), which extends downward. The side of the rear insert plate (823) is equipped with a rear mounting fixing plate (824), which protrudes outward from the surface of the rear insert plate (823) toward the outer side of the second bracket (82).

The rear insert plate (823) and the rear mounting fixing plate (824) form an "L" shape. During installation, the rear insert plate (823) is arranged to be inserted into the second upright positioning groove (121), achieving a limiting effect. Subsequently, using screws or other fastening components, the rear mounting fixing plate (824) is fixed within the second upright fixing hole (122), facilitating the secure fixation of the second bracket (82).

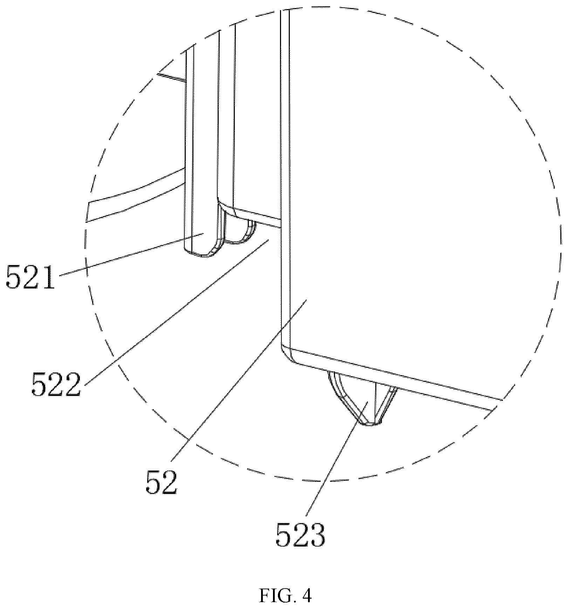

Referring to FIG. 4, when installing the support frame (5), its front and rear sides are provided with a front support mounting section (51) and a rear support mounting section (52), respectively.

The front support mounting section (51) includes a vertically arranged front limiting post (511), which extends downward. The top of the first bracket (81) is equipped with a crossbar (812) that has an upright positioning hole (813) and a third upright fixing hole (814). During installation, the front limiting post (511) is arranged to be inserted into the upright positioning hole (813), achieving a limiting effect. Then, using fastening components, the front support mounting section (51) is fixed within the third upright fixing hole (814).

On the other hand, the top of the second bracket (82) is provided with a second upper protrusion (822). The side of the rear support mounting section (52) is equipped with a vertically arranged second rear limiting post (521). A second limiting groove (522) is formed between the second rear limiting post (521) and the rear support mounting section (52). During installation, the second upper protrusion (822) is arranged to be inserted into the second limiting groove (522), achieving a limiting effect for the rear support mounting section (52).

The second upper protrusion (822) includes a horizontally arranged second upper fixing hole (825). Using fastening components, the rear support mounting section (52) is secured within the second upper fixing hole (825).

The installation of the first bracket (81), the second bracket (82), and the support frame (5) all adopts a "limit-first, then-fix" approach, which facilitates easy installation and disassembly. Additionally, the limiting structures enhance connection stability, thereby further improving structural strength.

On the side of the second upper protrusion (822) that is away from the second rear limiting post (521), a vertically arranged rear limiting plate (826) is provided. The bottom of the rear support mounting section (52) is further equipped with a vertically arranged second rear limiting post (523). After the rear support mounting section (52) is installed, the side of the second rear limiting post (523) abuts the side surface of the rear limiting plate (826). The bottom of the rear support mounting section (52) abuts the upper edge of the rear limiting plate (826).

The second limiting groove (522) and the second rear limiting post (523) provide horizontal limiting for the rear support mounting section (52), while the rear limiting plate (826) provides vertical limiting and support for the rear support mounting section (52).

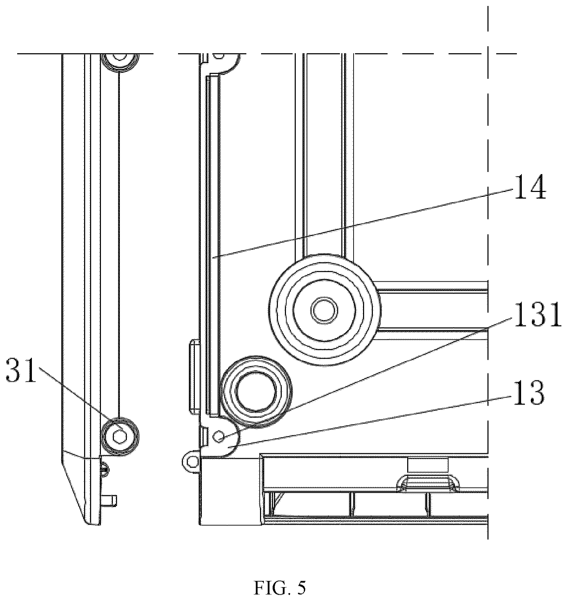

Referring to FIG. 5, to securely attach the side panels (3), the left and right sides of the base (1) are provided with bottom limiting grooves (13) with downward-facing openings. The bottom of the side panels (3) is equipped with bottom limiting cylinders (31) that are arranged to be inserted into the bottom limiting grooves (13). During installation, the base (1) is inserted downward into the bottom of the side panels (3), allowing the bottom limiting cylinders (31) to enter the bottom limiting grooves (13), thereby achieving a limiting effect.

The bottom limiting grooves (13) are also equipped with bottom fixing holes (131). Using screws or other fastening components, the bottom limiting cylinders (31) are arranged to be fixed within the bottom fixing holes (131).

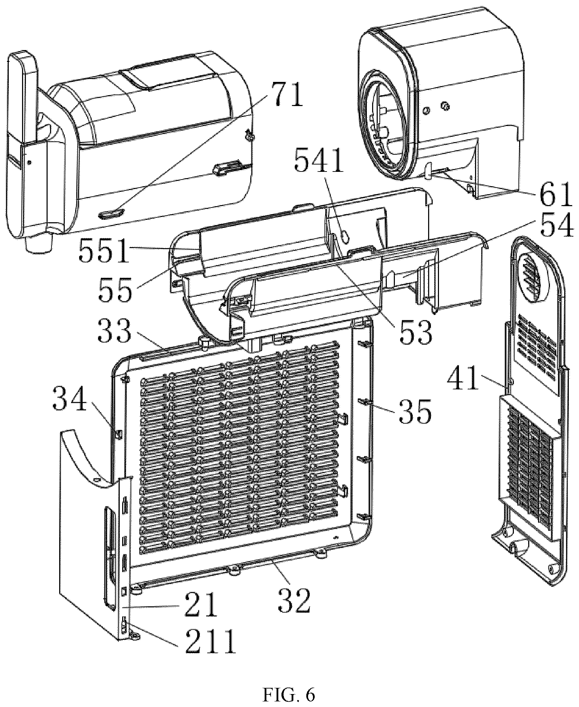

Referring to FIG. 6, multiple bottom limiting cylinders (31) are connected by bottom limiting ribs (32) arranged in the front-rear direction. Similarly, multiple bottom limiting grooves (13) are connected by bottom limiting long slots (14) arranged in the front-rear direction. After the base (1) is inserted downward into the bottom of the side panels (3), the bottom limiting ribs (32) are arranged to fit into the bottom limiting long slots (14), further enhancing the limiting effect. This configuration prevents the side panels (3) from toppling after the limiting step, making subsequent screw connections easier and improving the post-connection strength of the large flat panels.

The top of the side panels (3) is equipped with upper limiting long slots (33) arranged in the front-rear direction with upward-facing openings. The edge of the top of the support frame (5) is provided with upper limiting ribs (53) arranged in the front-rear direction and extending downward. During installation, the upper limiting ribs (53) are arranged to fit into the upper limiting long slots (33), providing a limiting effect and improving connection strength.

The bottom of the motor frame (6) is equipped with vertically arranged frame limiting posts (61). The support frame (5) is provided with a frame fixing section (54) that includes frame limiting holes (541). During installation, the frame limiting posts (61) are arranged to fit into the frame limiting holes (541), achieving a limiting effect. The frame limiting holes (541) also allow for the secure connection of the frame limiting posts (61). Additionally, the frame fixing section (54) is equipped with heat dissipation holes (542) for motor cooling.

The front side of the side panels (3) is equipped with multiple front fixing hooks (34) that are hook-shaped with ends extending upward. Both the left and right sides of the front panel (2) are equipped with front upright plates (21), which include multiple side fixing holes (211). The horizontal span of the side fixing holes (211) gradually decreases from bottom to top.

During installation, the front fixing hooks (34) are arranged to be inserted into the side fixing holes (211), achieving a limiting effect. The front upright plates (21) are then pulled downward, causing the front fixing hooks (34) to move toward the upper part of the side fixing holes (211). Because the horizontal span of the side fixing holes (211) narrows from bottom to top, the narrowed upper part of the side fixing holes (211) ultimately clamps the front fixing hooks (34), forming a secure connection.

On the other hand, referring to FIG. 6, the rear edge of the side panels (3) is equipped with multiple rear fixing hooks (35), with their ends extending toward the rear. The left and right edges of the rear panel (4) are provided with vertically arranged rear limiting grooves (41). The ends of the rear fixing hooks (35) are arranged to be inserted into the rear limiting grooves (41), forming a secure connection.

The cover (7) is inserted horizontally into the support frame (5). To facilitate the installation of the cover (7), both its left and right sides are equipped with sliding plates (71) that are arranged in the front-rear direction and protrude from the side surfaces of the cover (7). The inner sidewalls of the support frame (5) are equipped with sliding slots (55) that correspond in position to the sliding plates (71).

During horizontal insertion, the sliding plates (71) are arranged to fit into the sliding slots (55), and the sliding slots (55) provide limiting for the sliding plates (71), ensuring the cover (7) is accurately inserted horizontally. The ends of the sliding slots (55) are equipped with stop plates (551). When the sliding plates (71) are inserted to the limit position, they abut the stop plates (551), restricting the movement range of the cover (7).

The embodiment of the present application also discloses a slush machine (not shown in the drawings), which includes the above-described housing for a slush machine.

The housing for the slush machine is equipped with a supporting frame (8), which includes a first bracket (81) and a second bracket (82). The second bracket (82) comprises vertically arranged upright portions (821) located on the left and right sides of the base (1), as well as a second upper protrusion (822) positioned at the top of the two upright portions (821).

The condenser (91) of the refrigeration system (9) is fixed between the two upright portions (821). The copper pipe elbows (911) of the condenser (91) are positioned on its upper and lower sides. This vertical arrangement uses the upper and lower sides for fixing the condenser (91), which eliminates the need for additional space on the left and right sides to accommodate and cover the copper pipe elbows (911). This design reduces the overall size and creates a more compact structure.

The above description represents the preferred embodiment of the present application. It should be noted that various modifications and refinements can be made by those skilled in the art without departing from the principles of the present application. These modifications and refinements are considered within the protective scope of the present application.

## Claims

1. A housing for a slush machine, **characterized by** comprising a base, a front panel, side panels, a rear panel, a support frame, a motor frame, and a cover, wherein the front panel and the rear panel are detachably fixed to the front and rear sides of the base, the side panels are detachably fixed to the left and right sides of the base, the support frame is located above the base, the motor frame is installed on the support frame, and the cover is connected to the motor frame;
further comprising a supporting frame, the supporting frame comprising a first bracket and a second bracket positioned behind the first bracket, the first bracket being located at one end of the base near the front panel, with the bottom of the first bracket connected to the base and the top connected to one end of the support frame near the front panel, the second bracket being located at the other end of the base near the rear panel, with the bottom of the second bracket connected to the base and the top abutting the bottom of the support frame, and a condenser of a refrigeration system being installed within the second bracket.

2. The housing for a slush machine according to claim 1, **characterized in that** the front and rear ends of the base are provided with a front mounting section and a rear mounting section, respectively, wherein the front mounting section comprises a first upright positioning groove, the bottom of the first bracket is provided with an L-shaped front mounting angle iron, and the bottom of the front mounting angle iron is arranged to be inserted into the first upright positioning groove, the first upright positioning groove being provided with a first upright fixing hole, and the front mounting angle iron being fixed in the first upright fixing hole;
the rear mounting section comprises a second upright positioning groove, the outer side of the second upright positioning groove is provided with a second upright fixing hole, the bottom of the second bracket is provided with a vertically arranged rear insert plate, and the side of the rear insert plate is provided with a rear mounting fixing plate that protrudes outward from the surface of the rear insert plate toward the outer side of the second bracket, wherein the rear insert plate is arranged to be inserted into the second upright positioning groove, and the rear mounting fixing plate is fixed in the second upright fixing hole.

3. The housing for a slush machine according to claim 1, **characterized in that** the front and rear sides of the support frame are provided with a front support mounting section and a rear support mounting section, respectively, wherein the front support mounting section includes a vertically arranged front limiting post, the top of the first bracket is provided with a crossbar, and the crossbar is provided with an upright positioning hole and a third upright fixing hole, the front limiting post is arranged be inserted into the upright positioning hole, and the front support mounting section is fixed in the third upright fixing hole;
the top of the second bracket is provided with a second upper protrusion, the side of the rear support mounting section is provided with a vertically arranged second rear limiting post, and a second limiting groove is formed between the second rear limiting post and the rear support mounting section, wherein the second upper protrusion is arranged to be inserted into the second limiting groove, and the second upper protrusion is provided with a horizontally arranged second upper fixing hole, the rear support mounting section being fixed in the second upper fixing hole.

4. The housing for a slush machine according to claim 3, **characterized in that** one side of the second upper protrusion, away from the second rear limiting post, is further provided with a vertically arranged rear limiting plate, and the bottom of the rear support mounting section is further provided with a vertically arranged second rear limiting post, wherein the side of the second rear limiting post is arranged to abut the side surface of the rear limiting plate, and the bottom of the rear support mounting section abuts the upper edge of the rear limiting plate.

5. The housing for a slush machine according to claim 1, **characterized in that** the left and right sides of the base are respectively provided with bottom limiting grooves with downward-facing openings, and the bottom of the side panels is provided with bottom limiting cylinders, wherein the bottom limiting cylinders are arranged to be inserted into the bottom limiting grooves, the bottom limiting grooves being provided with bottom fixing holes, and the bottom limiting cylinders being fixed in the bottom fixing holes;
multiple bottom limiting cylinders are connected by bottom limiting ribs arranged in the front-rear direction, and multiple bottom limiting grooves are connected by bottom limiting long slots arranged in the front-rear direction, wherein the bottom limiting ribs are arranged to be inserted into the bottom limiting long slots.

6. The housing for a slush machine according to claim 1, **characterized in that** the top of the side panels is provided with upper limiting long slots arranged in the front-rear direction with upward-facing openings, and the top edge of the support frame is provided with upper limiting ribs arranged in the front-rear direction and extending downward, wherein the upper limiting ribs are arranged to be inserted into the upper limiting long slots;
the bottom of the motor frame is provided with vertically arranged frame limiting posts, the support frame is provided with a frame fixing section, and the frame fixing section is provided with frame limiting holes, wherein the frame limiting posts are arranged to be inserted into the frame limiting holes, and the frame fixing section is further provided with heat dissipation holes.

7. The housing for a slush machine according to claim 1, **characterized in that** the front side of the side panels is provided with multiple front fixing hooks that are hook-shaped with ends extending upward, and both the left and right sides of the front panel are provided with front upright plates, wherein the front upright plates are provided with multiple side fixing holes, the horizontal span of the side fixing holes decreases progressively from bottom to top, and the front fixing hooks are arranged to be inserted into the side fixing holes.

8. The housing for a slush machine according to claim 1, **characterized in that** the rear edge of the side panels is provided with multiple rear fixing hooks with ends extending toward the rear, and the left and right edges of the rear panel are provided with vertically arranged rear limiting grooves, wherein the ends of the rear fixing hooks are arranged to be inserted into the rear limiting grooves.

9. The housing for a slush machine according to claim 1, **characterized in that** the left and right sides of the cover are provided with sliding plates arranged in the front-rear direction, which protrude from the side surfaces of the cover, and the inner sidewalls of the support frame are provided with sliding slots that correspond in position to the sliding plates, wherein the sliding plates are arranged to be inserted into the sliding slots, the ends of the sliding slots are provided with stop plates, and the sliding plates are arranged to abut the stop plates.

10. A slush machine, **characterized by** comprising the housing for a slush machine according to any one of claims 1-9.
